# EUROPÄISCHE PATENTANMELDUNG

(11) **EP 3 421 393 A1**
(43) Veröffentlichungstag der Anmeldung: **02.01.2019**
(21) Anmeldenummer: 17001093.8
(22) Anmeldetag: 27.06.2017
(51) Int. Cl.: B65G 1/06

(54) **MOBILES LAGERFAHRZEUG**

(71) Anmelder: MLOG Logistics GmbH, 74196 Neuenstadt am Kocher (DE)
(72) Erfinder: Knörzer, Sven, 74214 Schöntal (DE); Leichtle, Georg, 74193 Schwaigern (DE)
(74) Vertreter: Schmid, Barbara

(57) **Zusammenfassung**

Die Erfindung betrifft ein mobiles Lagerfahrzeug (10) mit einer Hubplattform. Die Hubplattform weist zumindest zwei Plattformsegmente (22, 24) auf, die entsprechend der Lagerichtung (18) des Lagerfahrzeugs (10) hintereinander angeordnet sind. Erfindungsgemäß können die einzelnen Plattformsegmente (22, 24) unabhängig voneinander angehoben und abgesenkt werden. Dadurch ist der Transport von Ladehilfsmitteln mit unterschiedlichen Abmessungen möglich.

## Beschreibung

### TECHNISCHES GEBIET

Die Erfindung betrifft ein mobiles Lagerfahrzeug. Durch ein solches mobiles Lagerfahrzeug können Ladehilfsmittel - beispielsweise in Form von Paletten oder Kartonagen - angehoben, transportiert und wieder abgestellt werden. Derartige Lagerfahrzeuge können beispielsweise auch als Shuttle bezeichnet werden.

### STAND DER TECHNIK

Mobile Lagerfahrzeuge zur automatischen Bedienung von Kanallagern sind bekannt. Kanallager sind Regallager für Stückgut, bei denen in den einzelnen Fächern mehrere Ladehilfsmittel hintereinander stehen. Die Fächer werden Kanäle genannt und können eine Vielzahl von Ladehilfsmitteln aufnehmen. Ladehilfsmittel dienen in der Logistik zur Bildung von Ladeeinheiten; sie fassen also mehrere einzelne Güter zu größeren Einheiten zusammen. Bedeutende Ladehilfsmittel sind beispielsweise Paletten, Container oder Lagerkästen.

Das mobile Lagerfahrzeug kann beispielsweise von einer Umsetzeinrichtung vor den jeweiligen Kanal gefahren werden. Dort fährt das Lagerfahrzeug in ein Schienenprofil ein. Das Schienenprofil kann gleichzeitig die einzelnen Ladehilfsmittel tragen, so dass das Lagerfahrzeug unter den Ladehilfsmittel hindurchfahren kann. Das Auslagern von Ladehilfsmitteln kann somit durch Unterfahren und Anheben des Ladehilfsmittels erfolgen. Nach dem Anheben kann das Ladehilfsmittel zur Umsetzeinrichtung transportiert und auf dieser abgesetzt werden. Das Lagerfahrzeug besitzt dazu eine Plattform, die wahlweise abgesenkt oder angehoben werden kann. Bei abgesenkter Plattform kann das Ladehilfsmittel unterfahren werden. Wird die Plattform dagegen angehoben, kann auch das Ladehilfsmittel angehoben und bei angehobener Plattform transportiert werden.

Zur Energieversorgung kann das mobile Lagerfahrzeug über ein Schleppkabel mit der Umsetzeinrichtung verbunden sein. Alternativ dazu kann das mobile Lagerfahrzeug über eine autarke Energieversorgung verfügen, so dass dieses innerhalb eines Kanals autonom fahren kann. Um wieder Energie nachzuladen, kann das Lagerfahrzeug zu einer beliebigen Umsetzeinrichtung zurückkehren und von dieser an eine Ladestation verfahren werden. Gegebenenfalls kann das Nachladen der Energieversorgung des Lagerfahrzeugs auch unmittelbar an der Umsetzeinrichtung erfolgen.

Ladehilfsmittel gibt es in unterschiedlichen Abmessungen. So sind bei Paletten beispielsweise sowohl die sogenannte EURO-Poolpalette (800 Millimeter x 1200 Millimeter) als auch die Industriepalette (1000 Millimeter x 1200 Millimeter) weit verbreitet. Darüber hinaus werden vielfach auch DIN-Boxen als Ladehilfsmittel eingesetzt. Diese gibt es ebenfalls in unterschiedlichen Abmessungen; in der Regel sind die DIN-Boxen kleiner als Paletten. Um möglichst viele unterschiedliche Ladehilfsmittel transportieren zu können, sind die mobilen Lagerfahrzeuge in der Regel so bemessen, dass auch die größeren Industriepaletten auf die anhebbare Plattform passen. Die anhebbare Plattform der mobilen Lagerfahrzeuge weist also häufig Außenmaße von 1000 Millimetern auf 1200 Millimetern auf.

Abhängig von der Beschickung des Regallagers kann es vorkommen, dass Ladehilfsmittel unterschiedlicher Abmessungen in einem gemeinsamen Kanal gelagert werden. In diesem Fall kann es beim Transport von kleineren Ladehilfsmitteln durch die zu große Plattform des Lagerfahrzeugs zu Schwierigkeiten kommen. So können die kleineren Ladehilfsmittel in der Regel nicht bündig an dem nächsten Ladehilfsmittel abgestellt werden, da das Lagerfahrzeug dazu das nächste Ladehilfsmittel ein Stück weit unterfahren müsste. Dies ist jedoch bei angehobener Plattform unmöglich.

Auch beim Nachverdichten der Ladehilfsmittel in einem Kanal kann es zu Schwierigkeiten kommen. Werden nicht alle Ladehilfsmittel eines Kanals vollständig entnommen, kann es sinnvoll sein, die Ladehilfsmittel in diesem Kanal nachzuverdichten. Dadurch kann der Kanal von der Rückseite her wieder bestückt werden, so dass die Lagerkapazität des Regallagers voll zur Verfügung steht. Ein solches Nachverdichten ist bei unterschiedlichen Paletten-Abmessungen jedoch schwierig. Da das nachfolgende Ladehilfsmittel beim Anheben des zu transportierenden Ladehilfsmittels nicht unterfahren werden kann, muss das zu transportierende Ladehilfsmittel bündig an der hinteren Kante des Lagerfahrzeugs positioniert werden. Auf diese Weise entsteht bei kleineren Ladehilfsmittels ein Abstand zum vorderen Rand des Regalfachs beziehungsweise zum nach vorne angrenzenden Ladehilfsmittel. Um derartige Lücken zu vermeiden, wird das Ladehilfsmittel daher an einer freien Stelle des Kanals zunächst abgestellt und das Lagerfahrzeug anschließend neu unter dem Ladehilfsmittel positioniert. Auf diese Weise kann das Ladehilfsmittel nunmehr bündig an der vorderen Kante des Lagerfahrzeugs positioniert werden, so dass das zu transportierende Ladehilfsmittel direkt hinter dem vorderen Ladehilfsmittel abgestellt werden kann. Ein solcher Vorgang erfordert ein mehrmaliges Anheben und Absenken ein und desselben Ladehilfsmittels. Dies ist zeit- und kostenintensiv und damit wirtschaftlich ungünstig.

### DARSTELLUNG DER ERFINDUNG

Ausgehend von diesem vorbekannten Stand der Technik liegt der Erfindung die Aufgabe zugrunde, ein verbessertes mobiles Lagerfahrzeug anzugeben, mit dem Ladehilfsmittel unterschiedlicher Abmessungen möglichst unkompliziert transportiert werden können.

Das erfindungsgemäße Lagerfahrzeug ist durch die Merkmale des Hauptanspruchs 1 gegeben. Sinnvolle Weiterbildungen der Erfindung sind Gegenstand von sich an diesen Anspruch anschließenden weiteren Ansprüchen.

Das erfindungsgemäße Lagerfahrzeug besitzt eine Hubplattform, mittels der Ladehilfsmittel angehoben, transportiert und wieder abgesenkt werden können. Erfindungsgemäß ist vorgesehen, dass die Hubplattform zumindest zwei Plattformsegmente aufweist, die unabhängig voneinander angehoben und abgesenkt werden können. Die einzelnen Plattformsegmente sind entsprechend der Lagerichtung der Ladehilfsmittel angeordnet. Die Lagerichtung der Ladehilfsmittel entspricht dabei der Verfahrrichtung des Lagerfahrzeugs innerhalb des Schienensystems eines Regalfachs.

Sofern mit dem Lagerfahrzeug die größeren Industriepaletten transportiert werden sollen, können alle Plattformsegmente gemeinsam angehoben und abgesenkt werden. Die Industriepalette würde daher nach wie vor die Hubplattform des mobilen Lagerfahrzeugs vollständig ausfüllen. Soll dagegen mit dem Lagerfahrzeug lediglich die kleinere EURO-Poolpalette oder ein anderes, kleineres Ladehilfsmittel transportiert werden, werden lediglich die dafür erforderlichen Plattformsegmente angehoben. Ein Teil der Hubplattform würde in diesem Fall beim Transport der kleineren Ladehilfsmittel nicht angehoben werden, so dass mit diesem Teil des Lagerfahrzeugs ein Unterfahren bereits abgestellter Ladehilfsmittel möglich wäre. Beim Nachverdichten der Ladehilfsmittel in einem Kanal könnte daher das nebenstehende Ladehilfsmittel durch einen Teil der Plattformsegmente angehoben werden. Gleichzeitig könnte das Lagerfahrzeug durch das zumindest eine verbleibende, nicht angehobenen Plattformsegment das vordere Ladehilfsmittel so weit unterfahren, dass das transportierte Ladehilfsmittel bündig zu diesem vorderen Ladehilfsmittel abgestellt werden könnte. Somit können Arbeitsschritte eingespart werden, was zu erheblichen Zeitvorteilen führt.

Bei der Verwendung von genau zwei Plattformsegmenten, können die Maße eines der beiden Plattformsegmente vorzugsweise den Maßen des kleineren zu transportierenden Ladehilfsmittels - beispielsweise den Maßen einer EURO-Poolpalette oder einer DIN-Box - entsprechen.

Die Maße der gesamten Hubplattform können dagegen vorzugsweise einer Industriepalette entsprechen.

In einer bevorzugten Ausführungsform kann die Hubplattform insgesamt genau drei Plattformsegmente aufweisen. In diesem Fall können die Maße der gesamten Hubplattform den Maßen einer Industriepalette entsprechen, während die Maße des mittleren Plattformsegments gemeinsam mit einem der beiden äußeren Plattformsegmente den Maßen einer EURO-Poolpalette entsprechen können.

Um möglichst viele unterschiedliche Ladehilfsmittel transportieren zu können, kann die Hubplattform in einer besonders bevorzugten Ausführungsform eine Vielzahl von Plattformsegmenten aufweisen. Auf diese Weise ist es möglich, ein kleineres Ladehilfsmittel sowohl bündig an der Vorderkante des Lagerfahrzeugs anzuheben, als auch bündig an der hinteren Kante des Lagerfahrzeugs. In diesem Fall können die Maße der gesamten Hubplattform den Maßen des größten zu transportierenden Ladehilfsmittels entsprechend. Die Maße der einzelnen Plattformsegmente können jeweils identisch sein, so dass beispielsweise alle 200 Millimeter, alle 100 Millimeter oder alle 50 Millimeter ein neues Plattformsegment beginnt. Dabei kann es vorkommen, dass auch für das kleinste zu transportierende Ladehilfsmittel bereits mehrere Plattformsegmente angehoben werden müssen. Alternativ dazu können die Maße des Plattformsegments auch jeweils unterschiedlich sein, um an die genauen Maße der zu transportierenden Ladehilfsmittel optimal angepasst zu sein.

Vorzugsweise können die einzelnen Plattformsegmente entweder separat angehoben werden oder auch gemeinsam mit zumindest einem anderen Plattformsegment angehoben werden.

Die Ansteuerung der einzelnen Plattformsegmente kann beispielsweise über eine Nockensteuerung oder über Hubzylinder erfolgen. Auf diese Weise ist es möglich, die Plattformsegmente sowohl einzeln als auch gemeinsam abzusenken oder anzuheben.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine schematische Seitenansicht einer ersten Ausführungsform des erfindungsgemäßen Lagerfahrzeugs mit zwei Plattformsegmenten, in einem Regalfach mit einer Industriepalette und einer EURO-Poolpalette,
- Fig 2: eine schematische Seitenansicht des Lagerfahrzeugs gemäß Fig. 1 mit einem angehobenen Plattformsegment und angehobener EURO-Poolpalette,
- Fig. 3: eine schematische Seitenansicht einer zweiten Ausführungsform des erfindungsgemäßen Lagerfahrzeugs mit drei Plattformsegmenten, in einem Regalfach mit einer Industriepalette und einer EURO-Poolpalette,
- Fig. 4: eine schematische Seitenansicht des Lagerfahrzeugs gemäß Fig. 3 mit drei angehobenen Plattformsegmenten und angehobener Industriepalette,
- Fig. 5: eine schematische Seitenansicht des Lagerfahrzeugs gemäß Fig. 3 mit zwei angehobenen Plattformsegmenten und angehobener EURO-Poolpalette,
- Fig. 6: eine schematische Seitenansicht des Lagerfahrzeugs gemäß Fig. 5, bei der die benachbarte Palette teilweise unterfahren wird,
- Fig. 7: eine schematische Seitenansicht einer dritten Ausführungs-form des erfindungsgemäßen Lagerfahrzeugs mit sechs Plattformsegmenten, in einem Regalfach mit zwei unter-schiedlich großen DIN-Boxen,
- Fig 8: eine schematische Seitenansicht des Lagerfahrzeugs gemäß Fig. 7 mit drei angehobenen Plattformsegmenten und angehobener kleinerer DIN-Box,
- Fig 9: eine schematische Seitenansicht des Lagerfahrzeugs gemäß Fig. 7 mit vier angehobenen Plattformsegmenten und angehobener größerer DIN-Box und
- Fig. 10: eine schematische Seitenansicht des Lagerfahrzeugs gemäß Fig. 9, bei der die benachbarte DIN-Box teilweise unterfahren wird.

### WEGE ZUM AUSFÜHREN DER ERFINDUNG

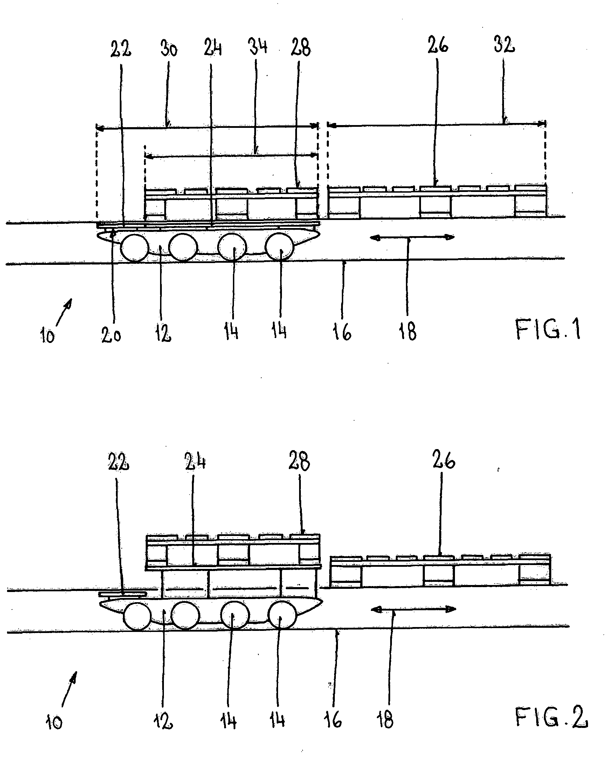

Eine erste Ausführungsform des erfindungsgemäßen Lagerfahrzeugs 10 ist in Fig. 1 und 2 dargestellt. Das Lagerfahrzeug 10 besitzt ein Fahrgestell 12 mit insgesamt vier Fahrrollen 14 pro Seite. Mit den Fahrrollen 14 kann das Lagerfahrzeug 10 in einem Schienensystem 16 in Lagerichtung 18 vor und zurück fahren.

Das Lagerfahrzeug 10 besitzt eine Hubplattform 20, die im vorliegenden Beispielsfall zwei Plattformsegmente 22, 24 aufweist. Die beiden Plattformsegmente 22, 24 sind etwa rechteckig ausgebildet und liegen in Lagerichtung 18 des Lagerfahrzeugs 10 hintereinander. Die beiden Plattformsegmente 22, 24 können beide abgesenkt vorhanden sein, wie dies in Fig. 1 dargestellt ist. In diesem Zustand kann das Lagerfahrzeug 10 frei im Schienensystem 16 verfahren werden, da auf dem Schienensystem 16 abgestellte Ladehilfsmittel (Industriepalette 26 und EURO-Poolpalette 28) unterfahren werden können.

Die Länge 30 der gesamte Hubplattform 20 entspricht etwa der Länge 32 einer Industriepalette 26. Sofern daher beide Plattformsegmente 22, 24 der Hubplattform 20 gemeinsam angehoben werden, ist der Transport einer Industriepalette 26 nach wie vor möglich. Die Länge 34 des größeren Plattformsegments 24 entspricht dagegen etwa der Länge 36 einer EURO-Poolpalette 28. Es ist daher ausreichend, lediglich das größere Plattformsegment 24 anzuheben (siehe Fig. 2), um die kleinere EURO-Poolpalette 28 anzuheben. Auf diese Weise kann eine benachbarte Palette mit dem abgesenkten kleineren Plattformsegment 22 unterfahren werden. Dadurch kann die EURO-Poolpalette 28 bündig an einer benachbarten Palette angehoben und abgesetzt werden kann. Ein zwischenzeitliches Absetzen der EURO-Poolpalette 28 und eine Neu-Ausrichtung des Lagerfahrzeugs 10 ist nicht mehr erforderlich.

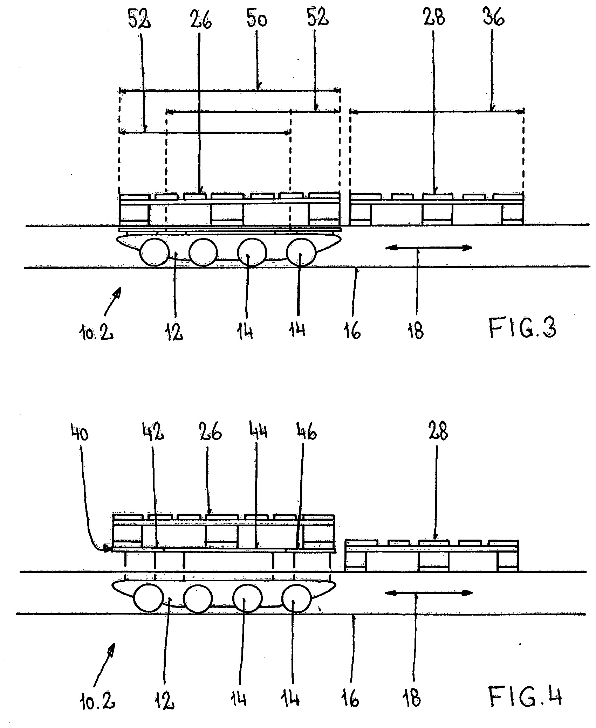

Eine zweite Ausführungsform des erfindungsgemäßen Lagerfahrzeugs 10.2 ist in den Fig. 3 bis 6 dargestellt. Das Lagerfahrzeug 10.2 besitzt ein Fahrgestell 12 mit insgesamt vier Fahrrollen 14 pro Seite. Mit den Fahrrollen 14 kann das Lagerfahrzeug 10.2 in einem Schienensystem 16 in Lagerichtung 18 vor und zurück fahren.

Das Lagerfahrzeug 10.2 besitzt eine Hubplattform 40, die im vorliegenden Beispielsfall drei Plattformsegmente 42, 44, 46 aufweist. Die drei Plattformsegmente 42, 44, 46 sind etwa rechteckig ausgebildet und liegen in Lagerichtung 18 des Lagerfahrzeugs 10.2 hintereinander. Die drei Plattformsegmente 42, 44, 46 können alle abgesenkt vorhanden sein, wie dies in Fig. 3 dargestellt ist. In diesem Zustand kann das Lagerfahrzeug 10.2 frei im Schienensystem 16 verfahren werden. Die Länge 50 der gesamte Hubplattform 40 entspricht etwa der Länge 32 einer Industriepalette 26. Sofern daher alle Plattformsegmente 42, 44, 46 der Hubplattform 40 gemeinsam angehoben werden, kann eine Industriepalette 26 angehoben werden (siehe Fig. 4).

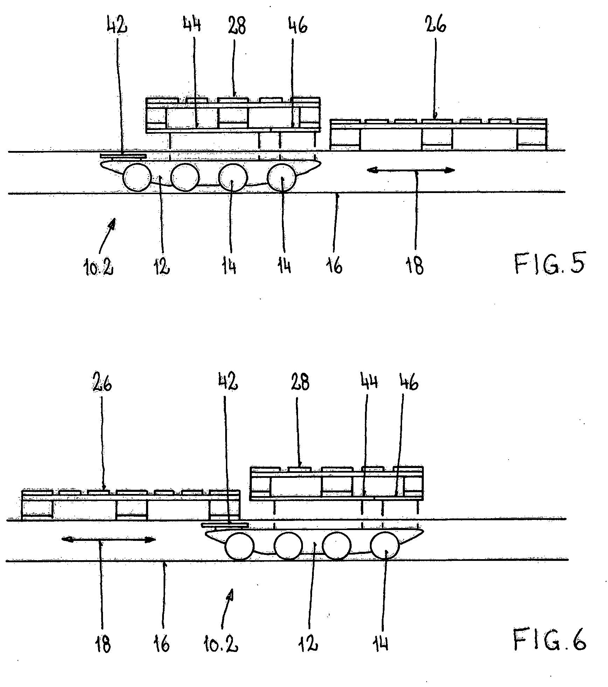

Die Länge 52 des in der Zeichnung links dargestellten Plattformsegments 42 gemeinsam mit dem mittleren Plattformsegment 44 ist im vorliegenden Beispielsfall identisch mit der Länge 52 des mittleren Plattformsegments 44 gemeinsam mit dem in der Zeichnung rechts dargestellten Plattformsegment 46. Diese Länge 52 entspricht etwa der Länge 36 einer EURO-Poolpalette 28. Werden daher lediglich das mittlere Plattformsegment 44 und eines der beiden äußeren Plattformsegmente 42, 46 angehoben (siehe Fig. 5), ist der Transport einer EURO-Poolpalette 28 möglich. Durch die Aufteilung der Hubplattform 40 in insgesamt drei Plattformsegmente 42, 44, 46 kann eine EURO-Poolpalette sowohl bündig an der hinteren Kante der Hubplattform 40 als auch bündig an der vorderen Kante der Hubplattform 40 positioniert werden. Gleichzeitig kann beidseitig ein benachbartes Ladehilfsmittel unterfahren werden, um die transportierte EURO-Poolpalette 28 bündig an diesem Ladehilfsmittel abstellen zu können.

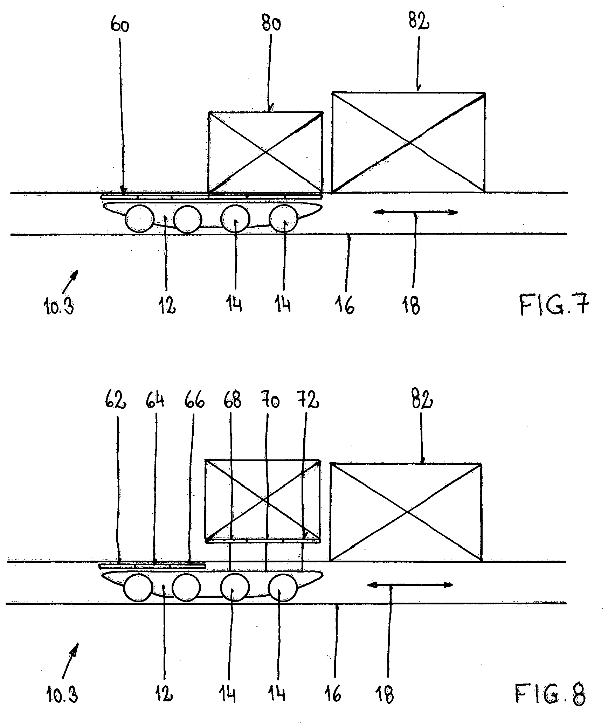

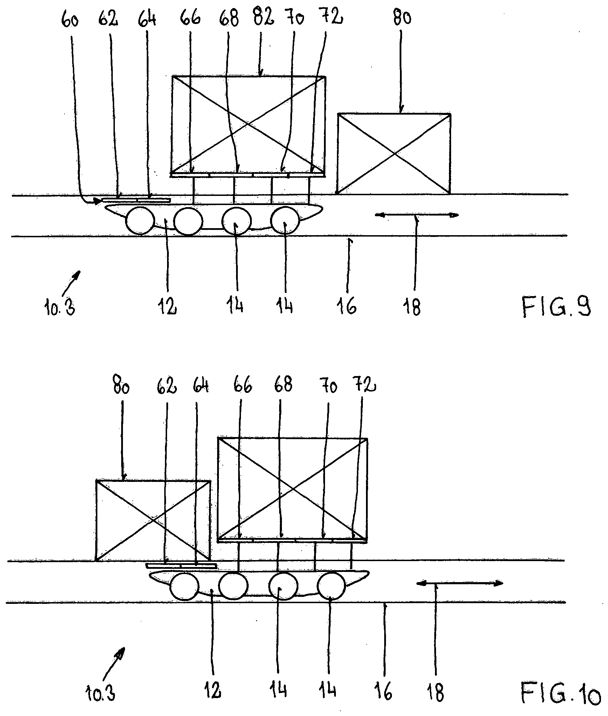

Eine dritte Ausführungsform des erfindungsgemäßen Lagerfahrzeugs 10.3 ist in den Fig. 7 bis 10 dargestellt. Das Lagerfahrzeug 10.3 besitzt ein Fahrgestell 12 mit insgesamt vier Fahrrollen 14 pro Seite. Mit den Fahrrollen 14 kann das Lagerfahrzeug 10 in einem Schienensystem 16 in Lagerichtung 18 vor und zurück fahren.

Das Lagerfahrzeug 10.3 besitzt eine Hubplattform 60, die im vorliegenden Beispielsfall sechs Plattformsegmente 62, 64, 66,68, 70, 72 aufweist. Die sechs Plattformsegmente 62, 64, 66, 68, 70, 72 sind etwa rechteckig ausgebildet und liegen in Lagerichtung 18 des Lagerfahrzeugs 10.3 hintereinander. Die Abmessungen der sechs Plattformsegmente 62, 64, 66, 68, 70, 72 sind im vorliegenden Beispielsfall jeweils identisch. Im Gegensatz dazu wäre es auch möglich, die Plattformsegmente 62, 64, 66, 68, 70, 72 jeweils mit unterschiedlichen Abmessungen vorzusehen.

Die sechs Plattformsegmente 62, 64, 66, 68, 70, 72 können alle abgesenkt vorhanden sein, wie dies in Fig. 7 dargestellt ist. In diesem Zustand kann das Lagerfahrzeug 10.3 frei im Schienensystem 16 verfahren werden. Die Länge 74 der gesamte Hubplattform 60 entspricht etwa der Länge 32 einer Industriepalette 26. Sofern daher alle Plattformsegmente 62, 64, 66, 68, 70, 72 der Hubplattform 60 gemeinsam angehoben werden, könnte eine Industriepalette 26 angehoben werden.

Nachdem alle sechs Plattformsegmente 62, 64, 66, 68, 70, 72 identische Maße aufweisen, kann durch drei beliebige nebeneinander liegende Plattformsegmente 62, 64, 66, 68, 70, 72 ein Ladehilfsmittel in Form einer DIN-Box 80 angehoben werden (siehe Fig. 7). Bei dem in Fig. 7 dargestellten Ausführungsbeispiel wurden die drei in Lagerichtung 18 gesehen hintersten Plattformsegmente 68, 70, 72 zum Anheben der DIN-Box 80 verwendet.

Werden dagegen nicht drei Plattformsegmente 62, 64, 66, 68, 70, 72 sondern insgesamt vier nebeneinander liegende Plattformsegmente 62, 64, 66, 68, 70, 72 angehoben, kann durch diese vier Plattformsegmente eine etwas größere DIN-Box 82 angehoben werden (siehe Fig. 8). Bei dem in Fig. 8 dargestellten Ausführungsbeispiel wurden wiederum die in Lagerichtung 18 gesehen vier hintersten Plattformsegmente 66, 68, 70, 72 zum Anheben der DIN-Box 82 verwendet. Mit den beiden nicht angehobenen, in Lagerichtung 18 gesehen vorderen Plattformsegmenten 62, 64 kann ein weiteres Ladehilfsmittel, in diesem Fall eine DIN-Box 80, unterfahren werden. Dadurch kann die DIN-Box 82 bündig hinter der DIN-Box 80 abgestellt werden.

Abhängig von den Abmessungen der zu transportierenden Ladehilfsmittel können auch die Abmessungen der einzelnen Plattformsegmente variiert werden.

## Patentansprüche

1. Mobiles Lagerfahrzeug (10, 10.2, 10.3)
- mit einer Hubplattform (20, 40, 60)
- **dadurch gekennzeichnet, dass**
- die Hubplattform (20, 40, 60) zumindest zwei Plattformsegmente (22, 24, 42, 44, 46, 62, 64, 66, 68, 70, 72) aufweist, die entsprechend der Lagerichtung (18) des Lagerfahrzeugs (10, 10.2, 10.3) hintereinander angeordnet sind,
- die Plattformsegmente (22, 24,42, 44,46,62, 64, 66, 68, 70, 72) unabhängig voneinander anhebbar und absenkbar sind.

2. Mobiles Lagerfahrzeug nach Anspruch 1,
- **dadurch gekennzeichnet, dass**
- die Hubplattform (20) zwei Plattformsegmente (22, 24) aufweist,
- die Maße (30) der gesamten Hubplattform (20) den Maßen (32) einer Industriepalette (26) entsprechen,
- die Maße (34) eines der beiden Plattformsegmente (24) den Maßen (36) einer EURO-Poolpalette (28) oder einer DIN-Box entsprechen.

3. Mobiles Lagerfahrzeug nach Anspruch 1,
- **dadurch gekennzeichnet, dass**
- die Hubplattform (40) drei Plattformsegmente (42, 44, 46) aufweist.

4. Mobiles Lagerfahrzeug nach Anspruch 3,
- **dadurch gekennzeichnet, dass**
- das mittlere Plattformsegment (44) separat oder gemeinsam mit zumindest einem der beiden äußeren Plattformsegmente (42, 46) anhebbar und absenkbar ist.

5. Mobiles Lagerfahrzeugs nach Anspruch 3 oder 4,
- **dadurch gekennzeichnet, dass**
- die Maße (50) der gesamten Hubplattform (40) den Maßen (32) einer Industriepalette (26) entsprechen,
- die Maße (52) des mittleren Plattformsegments (44) gemeinsam mit einem der beiden äußeren Plattformsegmente (42, 46) den Maßen (36) einer EURO-Poolpalette (28) entsprechen.

6. Mobiles Lagerfahrzeug nach Anspruch 1,
- **dadurch gekennzeichnet, dass**
- die Hubplattform (60) eine Vielzahl von Plattformsegmenten (62, 64, 66, 68, 70, 72) aufweist.

7. Mobiles Lagerfahrzeug nach Anspruch 6,
- **dadurch gekennzeichnet, dass**
- die einzelnen Plattformsegmente (62, 64, 66, 68, 70, 72) jeweils identische Maße aufweisen.

8. Mobiles Lagerfahrzeug nach einem der vorstehenden Ansprüche,
- **dadurch gekennzeichnet, dass**
- eine Nockensteuerung vorhanden ist,
- die Plattformsegmente über die Nockensteuerung einzeln oder gemeinsam anhebbar und absenkbar sind.

9. Mobiles Lagerfahrzeug nach einem der vorstehenden Ansprüche,
- **dadurch gekennzeichnet, dass**
- jedes der Plattformsegmente über zumindest einen Hubzylinder anhebbar und absenkbar ist.
